# EUROPEAN PATENT SPECIFICATION

(11) **EP 1 531 083 B1**
(45) Date of publication and mention of the grant of the patent: **22.03.2006**
(21) Application number: 03380262.0
(22) Date of filing: 11.11.2003
(51) Int. Cl.: B60R 1/04, B60J 3/02

(54) **Safety support for an interior mirror of a vehicle**
Sicherheitshalterung für einen Innenspiegel eines Fahrzeugs
Support de sécurité d'un mirroir intérieur d'un véhicule

(43) Date of publication of application: 18.05.2005
(73) Proprietor: Grupo Antolin Ingenieria, S.A., 09007 Burgos (ES)
(72) Inventor: Marcos Primo, Ignacio, 09001 Burgos (ES); Castano Bajo, Alfonso, 48150-Sondica (Vizcaya) (ES)
(74) Representative: Esteban Perez-Serrano, Maria Isabel

(56) References cited:
- EP-A- 0 275 903
- WO-A-98/00303
- US-A- 3 776 618
- US-A- 4 353 592
- US-A- 5 160 203
- US-A- 5 895 087

## Description

The invention is included within the field of interior mirrors for vehicles, of the type used for being assembled on an accessory of the vehicle, and which can incorporate a light source or other additional devices. It is particularly included in the field of interior glass mirrors for vehicles, which are required to comply with current safety requirements.

### BACKGROUND OF THE INVENTION

Numerous systems for installing interior mirrors for passengers in vehicles are known, generally on accessories such as sunshades. As they are close to the passenger's head, safety standards try to prevent them from breaking when an impact is experienced, causing slivers or cutting edges which can injure the occupants.

Due to the fragility of this type of mirrors manufactured with glass, it is difficult to comply with the requirements imposed for this type of devices.

Other materials, mainly metals and plastics, have been used as alternatives for overcoming these requirements, although these also present limitations.

In the case of metal mirrors, they have the drawback of requiring a degree of finish and age and corrosion resistance, making their cost greater than that of those manufactured with other materials.

In the case of using plastic materials, quality of the image and their dimensional stability are noticeably lesser than in glass mirrors, due to the effect of the temperature changes they undergo during their use.

For these reasons, it is preferable to use glass mirrors, but assembled such that in the case of an accident, they do not break if impacted nor therefore injure the occupants.

The breaking of an interior mirror can generally occur in two manners:
- By compression: the breaking is caused by forces acting directly on the mirror.
- By bending: when the forces exerted on the mirror (active, reactive or inertial), bend it. When these forces occur, the mirror easily breaks due to the low flexibility of the glass forming part of its structure.

To prevent these ways of fault in glass mirrors, several types of solutions have been developed.

Many times, the same cover provided for these mirrors, either for aesthetics or design, protects them from blows; this is the case, for example, of those disdosed in United States patents US-A-4,926,295, US-A-4,740,028, and US-A-4,378,129.

In other cases, the mirror is connected to one or several layers or plates of other materials, which, in case the glass mirror breaks, prevent the pieces from falling on the passenger, such as those disclosed, for example, in patents US-A-4,988,180 and US-A-5,115,346, although this latter case refers to a rear-view mirror.

A safety support according to the preamble of claim 1 is known from WO 98/00303.

However, these solutions are not satisfactory, since in the majority of cases they do not sufficiently comply with the current safety standards requiring that, in the case of an impact, the mirror should not break generating cutting edges, and furthermore, the assembly system implies design and style limitations affecting both the other functions and the aesthetics of the vehicle's interior.

### DESCRIPTION OF THE INVENTION

One object of the safety support for the interior mirror of a vehicle of the invention is to offer a support which integrates and fixes the part on which said mirror is assembled, and which serves as a rigid support and thus prevents the mirror from bending.

Another object of the invention is to make a support integrating and fixing the part in which said mirror is assembled and, in the case of the mirror being impacted, that the fixing mechanism provides little disassembly resistance and allows release of the assembly formed by the support plate and mirror. Thus, breaking thereof is prevented, moving to where it cannot injure the occupants, thus absorbing the force of impact on the mirror and preventing, therefore, breaking of the mirror.

Another object of the invention is to integrate an electric circuit for the supply or control of attached electric devices, such as the mirror lighting systems, for example, on a bearing plate comprised in the safety support, such that the electric device does not hinder movement of the bearing plate when the latter is released in the case of the mirror being impacted.

Another object of the invention is to provide a mirror and support assembly which does not visibly affect the interior design of the vehicle.

Another object of the invention is to provide a fast and easy support assembly method.

These objets are solved by a safety support according to claim 1 and a corresponding assembly method according to claim. 14.

The invention comprises a bearing plate for the mirror and a frame. The bearing plate has two major surfaces, a frontal surface, intended for receiving the mirror, and another back surface, and an outer edge. The frame has an interior perimeter having approximately the same shape and dimensions as the outer edge of the bearing plate, such that the bearing plate with the mirror can fit in the frame.

The assembly formed by the frame and bearing plate forms the safety support of the invention, which also comprises means for attaching the bearing plate (with the mirror) to the frame, such that the bearing plate does not separate from the frame during operational use or normal use, but does separate from the frame when a force exceeding a certain threshold is exerted on the mirror, assembled on the frontal surface of the bearing plate. Thus, when the mirror assembled on the bearing plate experiences an impact, the assembly formed by both elements can separate from the frame and move in a first direction with regard to the frame (which will be called disassembly direction) due to the effect of said force. The direction contrary to this first direction will be called assembly direction.

The term "operational use" refers to operations during which forces which are not large and which are normal during use and maintenance of the vehicle are exerted on the mirror for example, operations such as cleaning of the mirror, its normal handling or when the user touches the mirror; in these cases, the bearing plate should not separate from the frame. The threshold must be above these possible forces during operational use.

However, in the case of an accident of the vehicle or a passenger strongly striking the mirror, for example with the head, the bearing plate should indeed be released from the frame so that the mirror, with its support, can move with no obstacles and not break. After separating from the frame, the bearing plate with the mirror would preferably be housed inside the accessory where the mirror assembly is placed, such that the total force finally exerted on the mirror does not exceed the breaking force thereof.

Said breaking force is defined in each case by the dimensions and geometry of the mirror, as well as by the mechanical properties of the glass used in its manufacture. In any case, the threshold will be such that it is ensured that the breaking stresses of the mirror will not be reached at any point with smaller forces.

The attachment between the bearing plate and the mirror must ensure joint movement of both elements, and therefore it can be carried out in different manners, being able to point out among them the injection-moulding over the plate on the mirror when said plate is manufactured with a plastic material. However, other forms of attachment, such as gluing, use of resilient lugs, etc., or other materials for the manufacture of the support plate, are not discarded.

The different figures show, with an illustrative and non-limiting character, said type of support injection-moulded over the mirror, as one of the preferred embodiments.

The manner of attachment between the bearing plate solidly fixed to the mirror and the frame and which ensures attachment of both elements during operational use, is based on a combination of a set of projections on one of the two parts (bearing plate or frame) and of a corresponding set of cavities on the other part. When the projections are introduced in the corresponding cavities, normal forces can be exerted on the mirror during operational use. However, if the force exerted on the mirror exceeds the threshold value, lower than that of the breaking force of the mirror, the gripping force provided by the combination of projections and cavities is not enough to prevent the bearing plate from separating from the frame and moving in the disassembly direction.

The gripping force occurs when, once the two components, bearing plate and frame, are located in the final working position, each projection of the bearing plate of the mirror is housed in its corresponding cavity in the frame, (or each projection of the frame in each cavity of the bearing plate), such that an interference between both parts occurs which keeps them both attached. The projections or edges of the cavities, or both, must be made such that they allow flexible deformation. This can be achieved, for example, by manufacturing them from a suitable material, such as plastic, such that they are molded with the frame and the bearing plate. However, it could also be done by means of springs, or giving a rounded shape to the projections, or by any other manner which allows flexible gripping between projections and cavities. The assembly or disassembly between both parts is carried out as a result of the flexibility of these components.

The projections and cavities are arranged in such a manner that they can be indistinctively located either on the outer edge of the bearing plate, or on the interior perimeter of the frame, which is in contact with said outer edge when the support is assembled. Thus, the cavities on the frame are located in positions corresponding to the projections on the bearing plate, such that said small projections are introduced in these cavities of the frame. It is evident that the projections could also be placed on the frame and the cavities on the bearing plate.

The projections can have different shapes, always taking into account that said shape and its dimension are going to allow controlling the force necessary for assembly, and the maximum force which the attachment will support before disassembly occurs. Rounded or wedge-shaped shapes are preferably proposed, other geometries also being possible.

The frame can be assembled on the sunshade or on another part of a vehicle by means of any fixing means, for example by using screws, tabs, etc.

This plate can incorporate a plurality of reinforcement ribs formed on its back surface to provide more rigidity to the bearing plate of the mirror.

It is also possible to include other accessories, such as a device with an electric circuit, on the back surface of the bearing plate. This circuit may consist of a rigid system formed by a printed circuit board, or else by conductor strips, for example, inserted in spaces left between the ribs on the back surface of the bearing plate. The electric device may include several electric elements, more specifically, a light source which may be located on the same plane of the bearing plate and projecting outwardly from the bearing plate.

In these cases in which the mirror is accompanied by a lighting system, the frame will preferably have at least one reflecting optical parabola for each light source. This combination of elements of the electric device and of the reflecting optical parabolas in known mirror supports can restrict the free movement of the support plate in the case of impact, with the subsequent risk of breaking, as it is not achieved that the plate is released from the frame and moves in a disassembly direction with no obstacles. Furthermore, this interference between components hinders manufacturing in the assembly line.

For said reasons, this or these parabolas in the support of the invention are configured such that they are foldable around a hinge, being able to move from a working position, where they reflect the light from the light sources, and another open, folded position with regard to said working position. Thus, by folding the parabolas to the open position, the bearing plate with the mirror and with the light source or sources can be inserted in the frame, without there being any type of interferences between components during the assembly operation.

Likewise, in the case of impact with a force exceeding the threshold force, when the mirror and bearing plate separate from the frame and freely move in the first direction or disassembly direction, said parabolas move to their open position, rotating around their hinge without being an obstacle to the free movement of the bearing plate with the mirror and the other devices that it may carry.

In these cases in which the bearing plate also incorporates electric components or part of a circuit, the electric connectors thereof are arranged so that when the assembly on the frame is carried out, the electric connectors are automatically connected with the movement of the bearing plate in the frame, without needing to carry out subsequent operations.

On some occasions, the frame includes a cover for the mirror, which opens by folding it around a hinge, which defines an axis of rotation, including a device that turns on the lights of the mirror when this cover is opened. In that case, the electric circuit can include a circuit interruption system, with a first conductor terminal joined to the first of the poles of the interruption system, and another second conductor terminal joined to the second one of the poles of the interruption system. These two conductor terminals are located on the outer edge of the bearing plate corresponding to the side of the frame where the axis of rotation of the cover is located. A small conductor part is included on said cover, on the side of the axis of rotation of the cover, placed such that when the cover is opened, this small conductor part puts the two terminals in contact, closing the electric circuit, and current reaching the light source or sources.

Both this arrangement of the electric circuit and the location of the light sources, the foldable reflecting parabolas and the device for turning on the lights, have been arranged such that they do not obstruct the way to the separation of the bearing plate with all the elements it encompasses from the frame, and the subsequent movement of the assembly in the disassembly direction.

Therefore, the connection of the electric circuit on the back surface of the bearing plate with the general electric circuit of the automobile on the accessory where the mirror assembly is arranged should not influence said separation either, said connection being possible to consist of flaps, flexible wires or any other electric connection device not preventing the relative movement of the bearing plate with regard to the frame where it is inserted.

A second aspect of the invention is to provide a mirror assembly comprising a safety support with the previously explained features, and a mirror attached to the bearing plate.

A third aspect of the invention is an assembly method of the mirror support, which allows the quick assembly of the bearing plate together with the mirror.

Therefore, the following steps are taken:
- placing the bearing plate with the mirror and other devices on the frame and pressing in the assembly direction until the plate fits in place,
- fixing the assembly in its place inside the vehicle.

For those cases in which an electric system with lighting such as the one described is included the assembly, the steps of the assembly operation would be
- taking the frame and opening the optical parabolas,
- placing the bearing plate with the mirror and other devices on the frame and pressing in the assembly direction until the plate fits in place, carrying out the electric connection at the same time,
- closing the parabolas,
- connecting the electric circuit of the bearing plate to the rest of the circuit of the vehicle, and
- fixing the assembly in its place inside the vehicle.

### BRIEF DESCRIPTION OF THE DRAWINGS

A series of drawings is briefly described below which help to better understand the invention and which are expressly related to an embodiment of said invention, which is presented as an illustrative and non-limiting example thereof.
Figure 1 shows the sunshade with the mirror and frame assembled.
Figure 2 shows a rear view of the bearing plate assembled in the frame.
Figure 3 shows a rear view of the bearing plate and frame disassembled.
Figure 4 shows the bearing plate in the case an electric circuit is not needed.
Figure 5 shows a section of the plate assembled in the frame.
Figure 6 shows a detail of a manner of attaching the bearing plate and the frame.
Figure 7 shows a detail of the connecting mechanism of the electric circuit of the light sources.

### DESCRIPTION OF A PREFERRED EMBODIMENT OF THE INVENTION

Interior mirror assemblies of the type of those of the invention are usually placed on the sunshades, but they could be placed on another accessory or part of a vehicle, such as a headrest, for example.

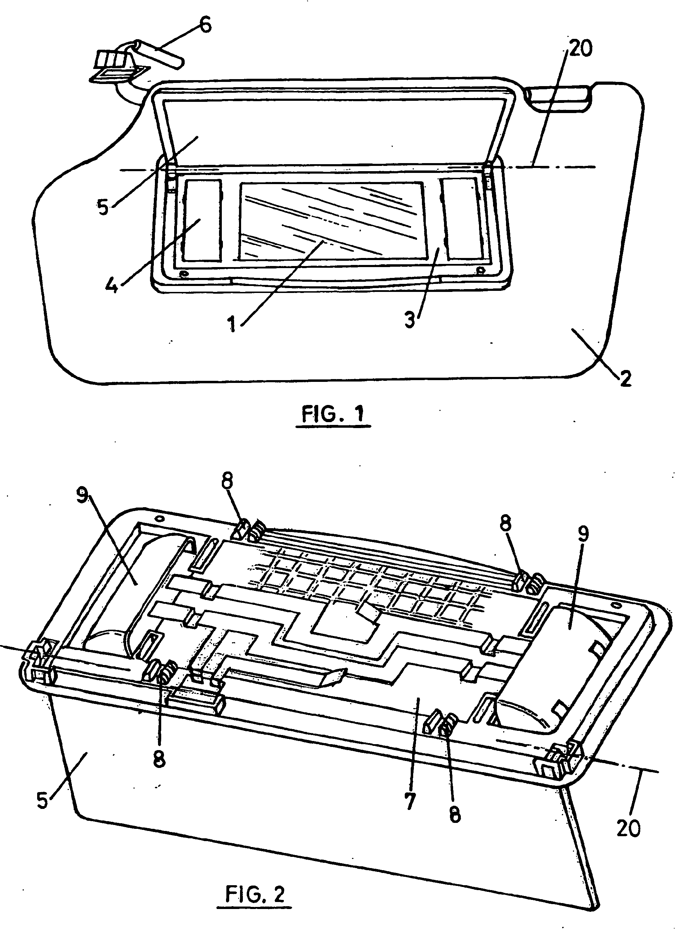

Figure 1 shows a sunshade with the interior mirror assembly with the support of the invention. The mirror (1) is placed on a bearing plate, not visible in the operational use position, since this bearing plate is inside a sunshade (2) and under the frame (3) which, in this case, is provided with light sources (4), the corresponding electric feed circuit thereof, and a cover (5). Electric wires (6) are installed for feeding current to the light sources through the interior of the attachment swivel joint of the sunshade to the body.

Figure 2 shows the rear part of the frame hidden inside the sunshade, with the bearing plate (7) of the mirror assembled. The frame can be coupled to the sunshade by means of any fixing means, for example by means of screws, flaps, etc. In this case, several assembly clips (8) have been arranged. The cover (5) and optical parabolas (9) reflecting the light emitted by the light sources can also be seen in this figure.

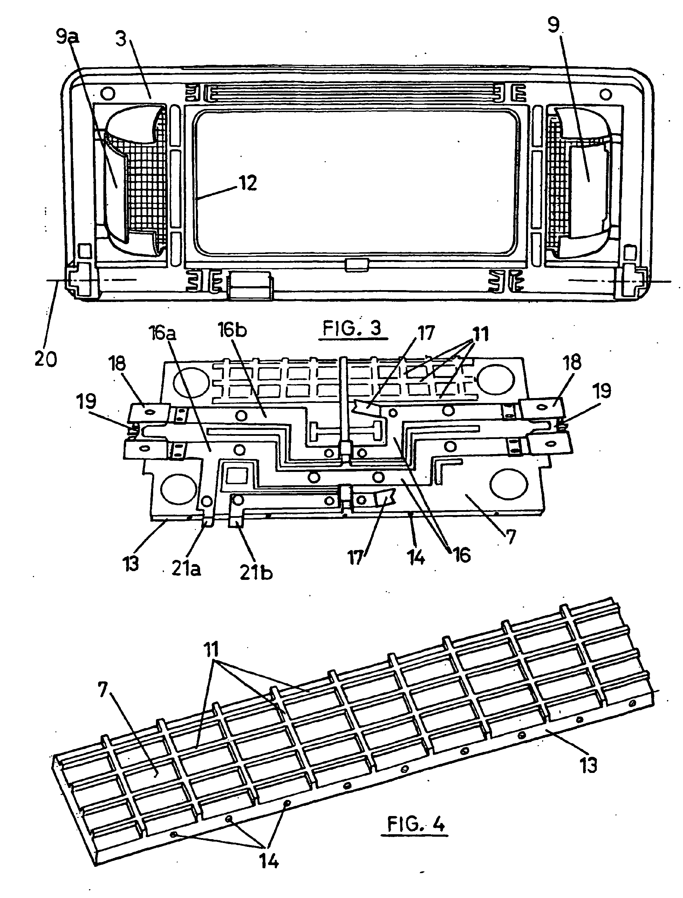

In figure 3, the bearing plate (7) of the mirror is disassembled from the frame (3). To separate the bearing plate (7) from the frame (3), the former must move in a first direction or disassembly direction. It will be seen below that in order to assemble the bearing plate on the frame, the parabolas (9) are opened (as the parabola (9b) on the left-hand side of figure 3 is shown) and the bearing plate (7) is pressed against the frame in a direction contrary to the first direction or assembly direction.

One of the advantages of the support for the interior mirror of the invention is that the mirror (1) is assembled together with a bearing support (7) serving as reinforcement for the mirror. Resistance of the bearing plate can be achieved by means of the material used, thicknesses, ribs... In this case, the bearing plate has reinforcement ribs (11).

In case an electric circuit on the bearing plate is not necessary, the ribs (11) can cover the entire back surface of the bearing plate (7) in one direction and in the perpendicular direction, as can be seen in figure 4.

To achieve greater safety in the vehicle against impacts which the occupants may suffer against the mirror, but using a glass one rather than a metal one, the bearing plate (7) with the mirror solidly fixed to it is assembled in the frame (3) such that the bearing plate (7) does not separate from the frame (3) during operational use, but it does separate from the frame (3) when a force exceeding a certain threshold is exerted on the frontal surface of the bearing plate, i.e. on the mirror, as previously explained.

In other words, the bearing plate (7) detaches from the frame, moving in the first direction of disassembly direction (10), before the mirror (1) supports a force on it great enough for being a risk of breaking. After separating from the frame, the mirror attached to its bearing plate (7) would remain inside the accessory where the mirror assembly is placed, in this case in the sunshade (2).

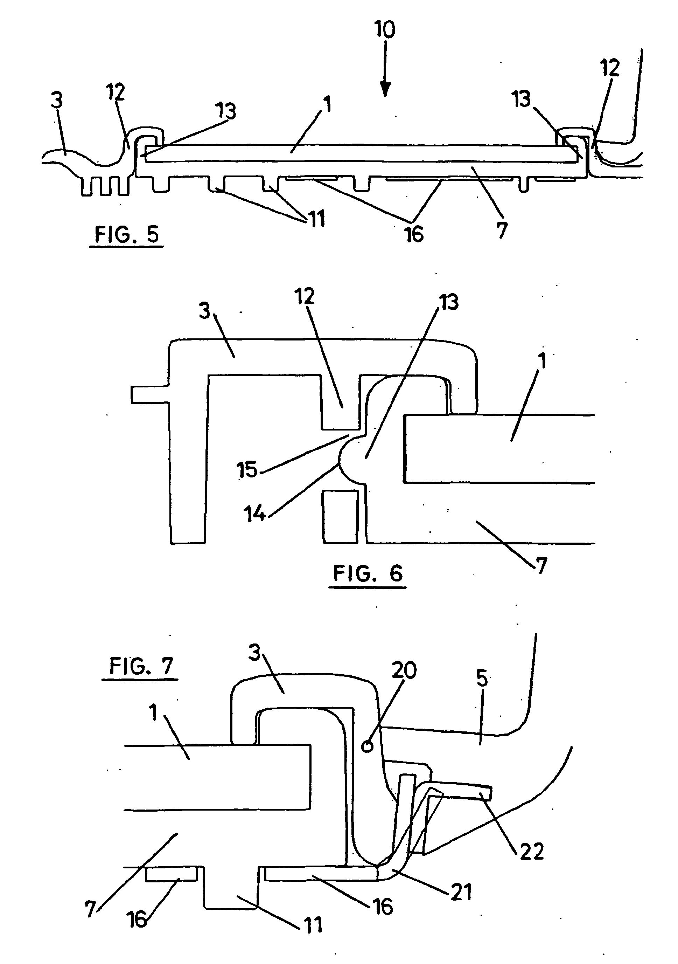

Figure 5 shows an example of a section of a bearing plate (7) injection-moulded over the mirror (1) and assembled in the frame. It can be seen how the plate, since it is injection-moulded, covers the entire perimeter of the mirror. The relative arrangement between the bearing plate (7) and frame (3) in the assembly position can also be seen, and how the former is housed therein, the frame having a U-shaped profile with the opening in the first direction (10) or disassembly direction, and the bearing plate having a projected edge, configured such that it fits into said U-shaped edge.

As shown in figure 6, there are small projections (14), in this case arranged on the outer edge (13) of the bearing plate (7), and cavities (15), in this case carried out on the interior perimeter (12) of the frame (3), and in positions corresponding to the projections, which in combination fix the support plate in the frame, preventing it from becoming loose.

The pairs of small projections and cavities are arranged such that said projections (14) are introduced in these cavities (15) of the frame, such that an interference between both is generated which prevents the relative movement once the assembly is carried out, as long as it does not undergo forces exceeding the threshold, as previously defined.

In any case, the force with which the bearing plate (7) is attached to the frame (3), due to the combination of the projections (14) and the cavities (15), is enough for the bearing plate (7) not to be released from the frame (3) during operational use, but not so large that it prevents the bearing plate (7) from being released from its fixing points to the frame when the force exerted on the mirror (1) (due to an accident or a blow) exceeds the previously explained threshold in order to prevent the mirror from breaking.

Other distributions of projections and cavities could be used for attaching the bearing plate (7) to the frame (3), for example, the projections could be placed on the frame and the cavities on the bearing plate, as long as the condition that the bearing plate is released in the first direction or disassembly direction (10) due to a force exceeding the threshold is met. The only condition is that each projection, whether it is on the frame or on the bearing plate, corresponds with a cavity on the other part when both parts are assembled together.

In the case that the mirror has elements needing an electric supply, such as light sources, it is necessary for there to be an electric circuit (16), and it will optionally be placed behind the bearing plate of the mirror. This circuit must not be an obstacle for the bearing plate (7) with the mirror to be released from the frame (3) and freely moving if it experiences an impact exceeding the threshold force, since this is the main purpose of the invention.

In the case shown in figure 3, a mirror with an electric circuit is shown, in which the reinforcement ribs (11) have been arranged such that conductor strips (16a and 16b) forming said circuit can be placed between them. In the example shown, these strips have two connectors consisting of two conductor strip segments (17), through which the circuit (16) on the bearing plate (7) would receive electric power from the general electric circuit of the automobile through the wires (6) inside the sunshade (2). This connection, not shown, can be any of those known with as long it does not prevent the separation of the bearing plate (7) and the frame (3), being able to consist in several flaps or flexible wires or any other electric connection device not preventing the movement of the bearing plate. According to this, the arrangement would be similar if the electric device or circuit was on a printed circuit, for example, rather than conductor strips.

In the example shown, the circuit (16), made with these conductor strips, has two lamp holders (18) welded thereon wherein the light sources are placed, which in this case are two light bulbs (19) for lighting (4) the mirror. This lighting system is designed so that it turns on when the cover (5) which is over the mirror (1) is opened.

To achieve this automatic turning on the circuit (16) is interrupted at a point near the edge of the bearing plate (7) closest to the axis of rotation (20) of the cover (5). There are two conductor terminals (21a and 21b) connected to each pole projecting from the edge of the bearing plate (7) on either side of this point,.

As can be seen in figure 7, the cover (5) carries a small conductive part (22) on the side of the axis of rotation of the cover, such that when the cover (5) is opened that conductive part (22) puts the two previous conductive terminals (21a and 21b) in contact, closing the circuit (16) and turning on the light sources (19).

All this is arranged such that the electric connection between the part of the electric circuit incorporated in the mirror and the general circuit of the vehicle is carried out without the intervention of specific connection operations and in an automatic manner when carrying out the assembly of the support plate with the mirror, and furthermore allowing that if the bearing plate (7) of the mirror detaches from the frame (3), neither the flaps (21 a and 21 b) nor the cover (5) imply an obstacle for the bearing plate (7) to move in the disassembly direction (10).

The design thus carried out has the additional advantage of the mirror assembly as such, which comprises the support for the mirror and the mirror itself. The passenger sees the mirror assembly in the sunshade as it appears in figure 1, with the appearance of a conventional mirror assembly.

Another added advantage of this manner of connecting the bearing plate and the frame is the facility for an operator to install the mirror assembly formed by the mirror and the mirror support in the interior of a vehicle, in this case in the sunshade. To do so, the following steps would have to be taken:
- taking the frame (3) and opening the optical parabolas (9), and
- placing the bearing plate (7) with the mirror (1) on the frame (3) and pressing in the assembly direction until the bearing plate (7) fits, by pressure, in its position on the frame, at the same time the electric connection being carried out with the general circuit of the vehicle, and
- closing the parabolas (9), and
- placing the mirror assembly in a suitable area of the vehicle (in this case in a sunshade (2)), by means of suitable means, which in this case are assembly clips (8).

If the interior mirror assembly for vehicles does not need and electric circuit, the steps would be:
- taking the frame (3), and
- placing the bearing plate (7) with the mirror (1) on the frame (3) and pressing in the assembly direction until the bearing plate (7) fits, by pressure, in its position on the frame, and
- placing the mirror assembly in this suitable area of the vehicle (in this case in a sunshade (2)), by means of suitable means, which in this case are assembly clips (8).

The materials, size, shape and arrangement of the elements will be susceptible to variation, as long as this implies no alteration of the basic concept of the invention.

Throughout the present description and claims, the words "comprise" or "include" and variations thereof, such as "comprising" or "including", are not intended to exclude other steps or components.

### MEANING OF THE REFERENCES MARKED IN THE FIGURES

To better understand the invention, the meaning of the references marked in the figures are added below:
1. Mirror
2. Sunshade
3. Frame
4. Light sources
5. Mirror cover
6. Electric feed wires
7. Bearing plate
8. Assembly clips for assembling the frame on the sunshade
9. Optical parabolas
9a. Open optical parabola
10. First direction or disassembly direction
11. Reinforcement ribs
12. Interior perimeter of the frame
13. Outer edge of the bearing plate
14. Projections
15. Cavities
16. Electric Circuit
16a. First conductor strip of the electric circuit
16b. Second conductor strip of the electric circuit
17. Connectors to the main electric circuit of the vehicle
18. Lamp holders
19. Light sources
20. Axis of rotation of the cover
21. Terminals of the electric circuit of the bearing plate
22. Conductor part of the cover

## Claims

1. A safety support for an interior mirror of a vehicle, comprising a bearing plate (7) rigidly attached to a mirror, a frame (3) with means (8) for being fixed to a part of a vehicle, and with an interior perimeter (12), the bearing plate having two major surfaces, a frontal surface, intended for receiving the mirror (1), and another back surface, and the bearing plate having an outer edge (13) corresponding with the interior perimeter (12) of the frame, and comprising means for attaching the bearing plate (7) with the mirror to the frame (3) such that the bearing plate (7) with the mirror does not separate from the frame (3) during operational use, **characterized in that** the means for attaching the bearing plate (7) with the mirror to the frame are such that the bearing plate (7) with the mirror does separate from the frame (3) when a force exceeding a certain threshold force is exerted on the frontal surface of the bearing plate (7), such that the bearing plate (7) solidly fixed to the mirror (1) can separate from the frame (3) and move in a first direction (10) with regard to the frame (3) due to the effect of said force exceeding the threshold.

2. A safety support according to claim 1, **characterized in that** the means for attaching the bearing plate (7) with the mirror (1) to the frame (3) comprise projections (14) and cavities (15) corresponding with said projections, such that when the bearing plate (7) with the mirror is fitted into the frame (3), each projection (14) is housed in the corresponding cavity (15), these projections (14) and cavities (15) collaborating in the attachment of the bearing plate (7) with the mirror on the frame (3) during operational use.

3. A safety support according to claim 2, **characterized in that** the projections (14) used for attaching the bearing plate (7) with the mirror to the frame (3) are located on an outer edge (13) of the bearing plate, and **in that** the corresponding cavities (15) are located on the interior perimeter (12) of the frame (3).

4. A safety support according to claim 2, **characterized in that** the projections (14) used for attaching the bearing plate with the mirror to the frame (3) are located on the interior perimeter (12) of the frame (3), and **in that** the corresponding cavities (15) are located on the outer edge (13) of the bearing plate (7).

5. A safety support according to any of claims 1 to 4, **characterized in that** the bearing plate (7) has on its back part elements increasing its rigidity.

6. A safety support according to claim 5, **characterized in that** the elements increasing the rigidity of the bearing plate (3) are reinforcement ribs (11).

7. A safety support according to any of claims 1 to 6, **characterized in that** the bearing plate (7) carries on its back surface at least one electric device (16) comprising several components.

8. A safety support according to claims 6 and 7, **characterized in that** the ribs (11) on the back surface of the bearing plate (7) leave one or several spaces between one another where one or several components of the electric device are inserted.

9. A safety support according to any of claims 7 or 8, **characterized in that** the electric device comprises at least one light source (19) placed on the same plane of the bearing plate (7) and projecting outwardly therefrom, and at least one reflecting optical parabola (9) corresponding to each light source (19) placed on the frame (3), and said reflecting optical parabolas (9) being foldable around a hinge between a working position and an open position.

10. A safety support according to claim 9, **characterized in that** the reflecting optical parabolas (9), when in the open position, do not obstruct the way to the bearing plate (7) with the mirror (1) and with the elements of the electric device when it moves in a direction contrary to the first direction during assembly until remaining fixed in the frame (3).

11. A safety support according to any of claims 8 or 9, **characterized in that** the reflecting optical parabolas (9) go from their working position to the open position in case the bearing plate (7) is released from the frame due to a force exceeding the threshold having been exerted on the mirror, and **in that** the open position do not obstruct the way to the bearing plate (7) with the mirror (1) and with the elements of the electric device in its movement in the first direction (10).

12. A safety support according to any of claims 7 to 11, **characterized in that** the electric circuit assembled on the bearing plate of the mirror has two connectors (17), such that in the moment in which the bearing plate is fitted in the frame, said terminals come into contact with several facing conductive contacts of the general electric circuit of the vehicle, and the electric connection between both circuits thus is carried out, and this electric connection does not imply any mechanical restriction for the free movement of the bearing plate (7) in the first direction.

13. A safety support according to any of claims 9 to 12, **characterized in that** the frame (3) includes a cover (5) for the mirror, which opens by rotating around a hinge with an axis of rotation (20), and **in that** the electric device includes an electric supply circuit (16) of the light sources, this electric circuit (16) including an interruption of the circuit between poles, and including a first conductive terminal (21a) and a second conductive terminal (21b), one attached to each pole of the electric circuit (16), and these two conductor terminals (21a and 21b) being placed on the side of the edge of the bearing plate (7) corresponding to the side of the frame where the axis of rotation (20) of the cover (5) is, and **in that** the cover (5) includes a conductive part (22) on the side of the axis of rotation (20) of the cover (5), and the two terminal conductors (21 a and 21b) and the conductive part (22) being arranged such that when the cover (5) is opened, uncovering the mirror, the conductor part (22) puts said first terminal (21a) into electric contact with said second terminal (21b), closing the electric circuit such that electric current can reach the light sources (19), and the first terminal (21a) and second terminal (21 b) being arranged on the bearing plate (7) and the conductive part (22) on the cover of the mirror (5) such that they are not an obstade if the bearing plate (7) detaches from the frame (3) and moves in the first direction (10).

14. A method of assembling a safety support according to any of claims 1 to 13, **characterized in that** it has at least the following steps:
- placing the bearing plate (7) with the mirror and the electric device components on the frame (3)
- pressing in a direction contrary to the first direction, perpendicularly to the surface of the mirror, until the bearing plate (7) fits in the frame (3),
- fixing the frame (3) on a part of the vehicle

15. A method of assembling a safety support according to claim 14, **characterized in that** it has at least the following steps:
- taking the frame (3) and moving the optical parabolas (9) to the open position,
- placing the bearing plate (7) with the mirror and the components of the electric device on the frame (3)
- pressing in a direction contrary to the first direction, perpendicularly to the surface of the mirror, until the bearing plate (7) fits in the frame (3),
- closing the parabolas (9) until leaving them in the working position,
- fixing the frame (3) on a part of the vehicle

## Patentansprüche

1. Ein Sicherheitsauflager für einen Innenspiegel eines Fahrzeugs, das eine Lagerplatte (7) umfasst, die starr an einem Spiegel befestigt ist, einen Rahmen (3) mit Mitteln (8) um an einen Fahrzeugteil befestigt zu werden und mit einer inneren Umfassung (12), wobei die Lagerplatte über zwei grosse Oberflächen verfügt, eine Vorderfläche, die dazu gedacht ist, den Spiegel (1) aufzunehmen und eine rückseitige Fläche, und der äussere Rand (13) der Lagerplatte stimmt mit der inneren Umfassung (12) des Rahmens überein und umfasst Mittel, um die Lagerplatte (7) mit dem Spiegel an dem Rahmen (3) zu befestigen, so dass die Lagerplatte (7) mit dem Spiegel während des Gebrauchs nicht von dem Rahmen (3) getrennt wird, **dadurch gekennzeichnet, dass** die Mittel zum Befestigen der Lagerplatte (7) mit dem Spiegel an dem Rahmen so gestaltet sind, dass die Lagerplatte (7) mit dem Spiegel von dem Rahmen (3) getrennt wird, wenn eine Kraft, die eine bestimmte Grenzkraft überschreitet, auf die Vorderfläche der Lagerplatte (7) ausgeübt wird, so dass die Lagerplatte (7), die an dem Spiegel (1) befestigt ist, von dem Rahmen (3) gelöst werden kann und in eine erste Richtung (10) hinsichtlich des Rahmens (3) bewegt werden kann, aufgrund der Tatsache, dass die besagte Kraft diese Grenze überschreitet.

2. Ein Sicherheitsauflager gemäss Anspruch 1, **dadurch gekennzeichnet, dass** die Mittel für das Befestigen der Lagerplatte (7) mit dem Spiegel (1) an dem Rahmen (3) Vorsprünge aufweisen (14) und Aussparungen (15), die mit den besagten Vorsprüngen übereinstimmen, so dass bei Anpassung der Lagerplatte (7) mit dem Spiegel in den Rahmen (3) jeder Vorsprung (14) von der entsprechenden Aussparung (15) aufgenommen wird, wobei diese Vorsprünge (14) und Aussparungen (15) zum Befestigen der Lagerplatte (7) mit dem Spiegel an dem Rahmen (3) während des Betriebs beitragen.

3. Ein Sicherheitsauflager gemäss Anspruch 2, **dadurch gekennzeichnet, dass** sich die Vorsprünge (14), die dazu verwendet werden, die Lagerplatte (7) mit dem Spiegel an dem Rahmen (3) zu befestigen, auf einer Aussenkante (13) der Lagerplatte befinden und **dadurch**, dass sich die entsprechenden Aussparungen (15) auf der inneren Umfassung (12) des Rahmens (3) finden.

4. Ein Sicherheitsauflager gemäss Anspruch 2, **dadurch gekennzeichnet, dass** sich die Vorsprünge (14), die dazu verwendet werden, die Lagerplatte (7) mit dem Spiegel an dem Rahmen (3) zu befestigen, auf der inneren Umfassung (12) des Rahmens befinden und **dadurch**, dass sich die entsprechenden Aussparungen (15) auf einer Aussenkante (13) der Lagerplatte (7) befinden.

5. Ein Sicherheitsauflager gemäss einem der Ansprüche 1 bis 4, **dadurch gekennzeichnet, dass** die Lagerplatte (7) auf ihrer Rückseite über Elemente verfügt, die deren Steifheit erhöhen.

6. Ein Sicherheitsauflager gemäss Anspruch 5, **dadurch gekennzeichnet, dass** die Elemente zur Erhöhung der Steifheit der Lagerplatte (3) Verstärkungsrippen (11) sind.

7. Ein Sicherheitsauflager gemäss einem der Ansprüche 1 bis 6, **dadurch gekennzeichnet, dass** die Lagerplatte (7) auf ihrer Rückseite wenigstens eine elektrische Vorrichtung (16) aufweist, die mehrere Komponenten umfasst.

8. Ein Sicherheitsauflager gemäss Anspruch 6 und 7, **dadurch gekennzeichnet, dass** die Rippen (11) auf der Rückseite der Lagerplatte (7) einen oder mehrere Abstände untereinander haben, in denen eine oder mehrere elektrische Vorrichtungen eingebaut werden.

9. Ein Sicherheitsauflager gemäss einem der Ansprüche 7 oder 8, **dadurch gekennzeichnet, dass** die elektrische Vorrichtung wenigstens eine Lichtquelle (19) aufweist, die auf der selben Ebene wie die Lagerplatte (7) angebracht ist von dieser nach Aussen gerichtet ist und wenigstens eine reflektierende optische Parabel (9) entsprechend jeder Lichtquelle (19), die auf dem Rahmen (3) angebracht ist, wobei besagte reflektierende optische Parabeln (9) um eine Achse kippbar von einer Arbeitsposition in eine offene Position sind.

10. Ein Sicherheitsauflager gemäss Anspruch 9, **dadurch gekennzeichnet, dass** die reflektierenden optischen Parabeln (9) in der offenen Position nicht den Weg der Lagerplatte (7) mit dem Spiegel (1) und mit den Elementen der elektrischen Vorrichtung behindern, wenn es sich in die Richtung entgegengesetzt der ersten Richtung bewegt, wenn die Montage bis zu dem Befestigen an dem Rahmen (3) vorgenommen wird.

11. Ein Sicherheitsauflager gemäss einem der Ansprüche 8 oder 9, **dadurch gekennzeichnet, dass** die reflektierenden optischen Parabeln (9) von der Arbeitsposition in die offene Position gehen, wenn sich die Lagerplatte (7) von dem Rahmen aufgrund einer auf den Spiegel einwirkenden Kraft löst, die die Grenzkraft überschreitet und **dadurch**, dass die offene Position nicht den Weg der Lagerplatte (7) mit dem Spiegel (1) und mit den Elementen der elektrischen Vorrichtung bei der Bewegung in die erste Richtung (10) behindert.

12. Ein Sicherheitsauflager gemäss einem der Ansprüche 7 bis 11, **dadurch gekennzeichnet, dass** der elektrische Kreislauf, der auf der Lagerplatte des Spiegels angebracht ist, zwei Anschlüsse (17) aufweist, so dass in dem Moment, in dem die Lagerplatte in den Rahmen eingepasst wird, die besagen Anschlüsse in Kontakt mit mehreren leitfähigen Kontakten des Hauptstromkreises des Fahrzeugs treten und die elektrische Verbindung zwischen beiden Kreisläufen so hergestellt wird und diese elektrische Verbindung bringt keinerlei mechanische Einschränkungen für die freie Bewegung der Lagerplatte (7) in die erste Richtung mit sich.

13. Ein Sicherheitsauflager gemäss einem der Ansprüche 9 bis 12, **dadurch gekennzeichnet, dass** der Rahmen (3) eine Abdeckung (5) für den Spiegel umfasst, die geöffnet wird, indem sie um ein Gelenkteil mit einer Rotationsachse (20) gedreht wird und **dadurch**, dass die elektrische Vorrichtung eine elektrischen Versorgungskreis (16) der Lichtquellen umfasst, wobei dieser elektrische Kreislauf (16) eine Unterbrechung des Kreislaufs zwischen den Polen umfasst und einen ersten leitfähigen Anschluss (21a) aufweist und einen zweiten leitfähigen Anschluss (21 b), von denen einer an jedem Pol des elektrischen Kreislaufs (16) befestigt ist und diese beiden leitfähigen Anschlüsse (21a und 21b) befinden sich auf der Seite der Kante der Lagerplatte (7), die der Seite des Rahmens entspricht, an der die Rotationsachse (20) der Abdeckung (5) ist und **dadurch**, dass die besagte Abdeckung (5) einen leitfähigen Teil (22) auf der Seite der Rotationsachse (20) der Abdeckung (5) umfasst und die beiden leitfähigen Anschlüsse (21a und 21b) und der leitfähige Teil (22) sind so angebracht, dass, wenn die Abdeckung (5) geöfnet wird und der Spiegel aufgedeckt wird, der leitfähige Teil (22) den ersten Anschluss (21a) in elektrischen Kontakt mit dem besagten zweiten Anschluss (21 b) bringt, wodurch der elektrische Kreislauf geschlossen wird, so dass der elektrische Strom zu den Lichtquellen (19) gelangen kann und der erste Anschluss (21a) und der zweite Anschluss (21b) sind so auf der Lagerplatte (7) angebracht und der leitfähige Teil (22) auf der Abdeckung des Spiegels (5), dass sie keine Behinderung darstellen, wenn die Lagerplatte (7) sich von dem Rahmen (3) löst und sich in die erste Richtung (10) bewegt.

14. Eine Methode zum Zusammenbau eines Sicherheitsauflagers gemäss einem der Ansprüche 1 bis 13, **dadurch gekennzeichnet, dass** sie mindestens aus folgenden Schritten besteht:
- Anbringung der Lagerplatte (7) mit dem Spiegel und den Komponenten der elektrischen Vorrichtung auf dem Rahmen (3)
- Drücken in die zu der ersten Richtung entgegengesetzte Richtung, senkrecht zu der Oberfläche des Spiegels, bis die Lagerplatte (7) in den Rahmen (3) passt.
- Befestigen des Rahmens (3) an einem Fahrzeugteil

15. Eine Methode zum Zusammenbau eines Sicherheitsauflagers gemäss Anspruch 14, **dadurch gekennzeichnet, dass** sie mindestens aus folgenden Schritten besteht:
- Nehmen des Rahmens (3) und Bewegung der optischen Parabeln (9) in die offene Position
- Anbringen der Lagerplatte (7) mit dem Spiegel und den Komponenten der elektrischen Vorrichtung auf dem Rahmen (3)
- Drücken in die zu der ersten Richtung entgegengesetzte Richtung, senkrecht zu der Oberfläche des Spiegels, bis die Lagerplatte (7) in den Rahmen (3) passt.
- Schliessen der Parabeln (9), bis sie sich in Arbeitsposition befinden,
- Befestigen des Rahmens (3) an einem Fahrzeugteil

## Revendications

1. Un support de sécurité pour un miroir intérieur d'un véhicule, comprenant une plaque de support (7) rigidement fixée à un miroir, un cadre (3) avec des moyens (8) pour être fixé à une partie d'un véhicule, et avec un périmètre intérieur (12), la plaque de support ayant deux surfaces principales, une surface avant, destinée à recevoir le miroir (1), et une autre surface arrière, et la plaque de support ayant un bord extérieur (13) correspondant au périmètre intérieur (12) du cadre, et comprenant des moyens pour fixer la plaque de support (7) avec le miroir au cadre (3) de manière que la plaque de support (7) avec le miroir ne se sépare pas du cadre (3) pendant son utilisation opérationnelle, **caractérisé en ce que** les moyens pour fixer la plaque de support (7) avec le miroir au cadre sont tels que la plaque de support (7) avec le miroir ne se sépare pas du cadre (3) lorsqu'une force qui dépasse une certaine force de seuil est exercée sur la surface avant de la plaque de support (7), de manière que la plaque de support (7) solidement fixée au miroir (1) puisse se séparer du cadre (4) et se déplacer dans une première direction (10) par rapport au cadre (3), cela étant dû à l'effet de ladite force dépassant le seuil.

2. Un support de sécurité selon la revendication 1, **caractérisé en ce que** les moyens pour fixer la plaque de support (7) avec le miroir (1) au cadre (3) comprennent des saillies (14) et des cavités (15) correspondant auxdites saillies, de telle manière que lorsque la plaque de support (7) avec le miroir est montée dans le cadre (3), chaque saillie (14) est logée dans la cavité correspondante (15), ces saillies (14) et ces cavités (15) collaborant dans la fixation de la plaque de support (7) avec le miroir sur le cadre (3) pendant l'utilisation opérationnelle.

3. Un support de sécurité selon la revendication 2, **caractérisé en ce que** les saillies (14) utilisées pour fixer la plaque de support (7) avec le miroir au cadre (3) sont situées sur un bord extérieur (13) de la plaque de support, et **en ce que** les cavités correspondantes (15) sont situées sur le périmètre intérieur (12) du cadre (3).

4. Un support de sécurité selon la revendication 2, **caractérisé en ce que** les saillies (14) utilisées pour fixer la plaque de support avec le miroir au cadre (3) sont situées sur le périmètre intérieur (12) du cadre (3), et **en ce que** les cavités correspondantes (15) sont situées sur le bord extérieur (13) de la plaque de support (7).

5. Un support de sécurité selon l'une quelconque des revendications 1 à 4, **caractérisé en ce que** la plaque de support (7) a sur sa partie arrière des éléments augmentant sa rigidité.

6. Un support de sécurité selon la revendication 5, **caractérisé en ce que** les éléments augmentant la rigidité de la plaque de support (3) sont de nervures de renforcement (11).

7. Un support de sécurité selon l'une quelconque des revendications 1 à 6, **caractérisé en ce que** la plaque de support (7) porte sur sa surface arrière au moins un dispositif électrique (16) comprenant plusieurs composants.

8. Un support de sécurité selon les revendications 6 et 7, **caractérisé en ce que** les nervures (11) sur la surface arrière de la plaque de support (7) laisse un ou plusieurs espaces entre les unes et les autres où sont insérés un ou plusieurs composants du dispositif électrique.

9. Un support de sécurité selon l'une quelconque des revendications 7 ou 8, **caractérisé en ce que** le dispositif électrique comprend au moins une source lumineuse (19) mise en place sur le même plan que la plaque de support (7) et extérieurement en vol à faux à partir de celle-ci, et au moins une calotte optique réfléchissante (9) correspondant à chaque source lumineuse (19) mise en place sur le cadre (3), et lesdites calottes optiques réfléchissantes (9) étant pliantes autour d'une articulation entre une position de travail et une position ouverte.

10. Un support de sécurité selon la revendication 9, **caractérisé en ce que** les calottes optiques réfléchissantes (9), lorsqu'elles sont dans une position ouverte, n'obstruent pas le chemin à la plaque de support (7) avec le miroir (1) et avec les éléments du dispositif électrique lorsqu'elle se déplace dans une direction contraire à la première direction pendant l'assemblage jusqu'à ce qu'elle demeure fixée dans le cadre (3).

11. Un support de sécurité selon l'une quelconques des revendications 8 ou 9, **caractérisé en ce que** les calottes optiques réfléchissantes (8) vont de la position de travail à la position ouverte si la plaque de support (7) est libérée du cadre dû à une force surpassant le seuil qui a été exercée sur le miroir, et **en ce que** la position ouverte n'obstrue pas le chemin de la plaque (7) avec le miroir (1) et avec les éléments du dispositif électrique dans son mouvement dans la première direction (10).

12. Un support de sécurité selon l'une quelconque des revendications 7 à 11, **caractérisé en ce que** le circuit électrique assemblé sur la plaque de support du miroir a deux connecteurs (17), de manière qu'au mouvement auquel la plaque de support est montée dans le cadre, lesdites bornes entrent en contact avec plusieurs bornes conductrices opposées du circuit électrique général du véhicule, et la connexion électrique entre les deux circuits est ainsi réalisée, et cette connexion électrique n'implique aucune restriction mécanique pour le mouvement libre de la plaque de support (7) dans la première direction.

13. Un support de sécurité selon l'une quelconque des revendications 9 à 12, **caractérisé en ce que** le cadre (3) inclut un couvercle (5) pour le miroir, qui s'ouvre en faisant tourner une articulation avec un axe de rotation (20), et **en ce que** le dispositif électrique inclut un circuit d'alimentation électrique (16) des sources lumineuses, ce circuit électrique (16) incluant une interruption du circuit entre les pôles, et incluant une première borne conductrice (21a) et une deuxième borne conductrice (21b), l'une fixée à chaque pôle du circuit électrique (16), et ces deux bornes conductrices (21a et 21b) étant mises en place sur le côté du bord de la plaque de support (7) correspondant au côté du cadre où se trouve l'axe de rotation (20) du couvercle (5), et **en ce que** le couvercle (5) inclut une pièce conductrice (22) sur le côté de l'axe de rotation (22) du couvercle (5), et les deux bornes conductrices (21a et 21b) et la pièce conductrice (22) sont disposées de telle manière que lorsque le couvercle (5) est ouvert, en découvrant le miroir, la pièce conductrice (22) met ladite première borne (21a) en contact électrique avec ladite deuxième borne (21b), en fermant le circuit électrique de telle manière que le courant électrique peut atteindre les sources lumineuses (19), et la première borne (21a) et la deuxième borne (21b) sont disposées sur la plaque de support (7) et la pièce conductrice (22) sur le couvercle du miroir (5) de telle manière qu'elles ne sont pas un obstacle si la plaque de support (7) se détache du cadre (3) et se déplace dans la première direction (10).

14. Un procédé d'assemblage d'un support de sécurité selon l'une quelconque des revendications 1 à 13, **caractérisé en ce qu'**il a au moins les étapes suivantes :
- mettre en place la plaque de support (7) avec le miroir et les composants du dispositif électrique sur le cadre (3),
- presser dans une direction opposée à la première direction, perpendiculairement à la surface du miroir, jusqu'à ce que la plaque de support (7) soit montée dans le cadre (3),
- fixer le cadre (3) sur une partie du véhicule.

15. Un procédé d'assemblage d'un support de sécurité selon la revendication 14, **caractérisé en ce qu'**il a les étapes suivantes :
- prendre le cadre (3) et déplacer les calottes optiques (9) vers la position ouverte,
- mettre en place la plaque de support (7) avec le miroir et les composants du dispositif électrique sur le cadre (3),
- presser dans une direction opposée à la première direction, perpendiculairement à la surface du miroir, jusqu'à ce que la plaque de support (7) soit montée dans le cadre (3),
- fermer les calottes (9) jusqu'à le laisser dans la position de travail,
- fixer le cadre (3) sur une partie du véhicule.
